# EUROPEAN PATENT SPECIFICATION

(11) **EP 2 672 303 B1**
(45) Date of publication and mention of the grant of the patent: **30.09.2015**
(21) Application number: 13170961.0
(22) Date of filing: 07.06.2013
(51) Int. Cl.: G02B 7/02

(54) **Fixing structure of object and optical device using the structure**
Befestigungsstruktur eines Objekts und optische Vorrichtung mit der Struktur
Structure de fixation d'objet et dispositif optique utilisant cette structure

(30) Priority: 07.06.2012 JP 2012130115
(43) Date of publication of application: 11.12.2013
(73) Proprietor: OMRON CORPORATION, Kyoto-shi, Kyoto 600-8530 (JP)
(72) Inventor: Mizusaki, Hiroyuki, Kyoto-shi, Kyoto 600-8530 (JP); Okuno, Motoharu, Kyoto-shi, Kyoto 600-8530 (JP)
(74) Representative: Horn Kleimann Waitzhofer Patentanwälte PartG mbB

(56) References cited:
- EP-A1- 1 223 749
- JP-A- 2004 044 281
- US-A1- 2005 243 443
- US-A1- 2005 249 549

## Description

### BACKGROUND OF THE INVENTION

### 1. TECHNICAL FIELD

The present invention relates to a snap-fit type fixing structure to be used for attaching a predetermined object into a case body and an optical device to which the fixing structure is applied.

### 2. RELATED ART

The snap-fit type serves to deform an engaging member formed by a material having elastic force through pressing force generated by an object to be fixed and to press down and support the object by restoring force of the engaging member when the pressing force is cancelled. Since the snap-fit type can complete fixation by a simple operation without using an adhesive, a tool, or the like, it is a fixing type which is widely employed.

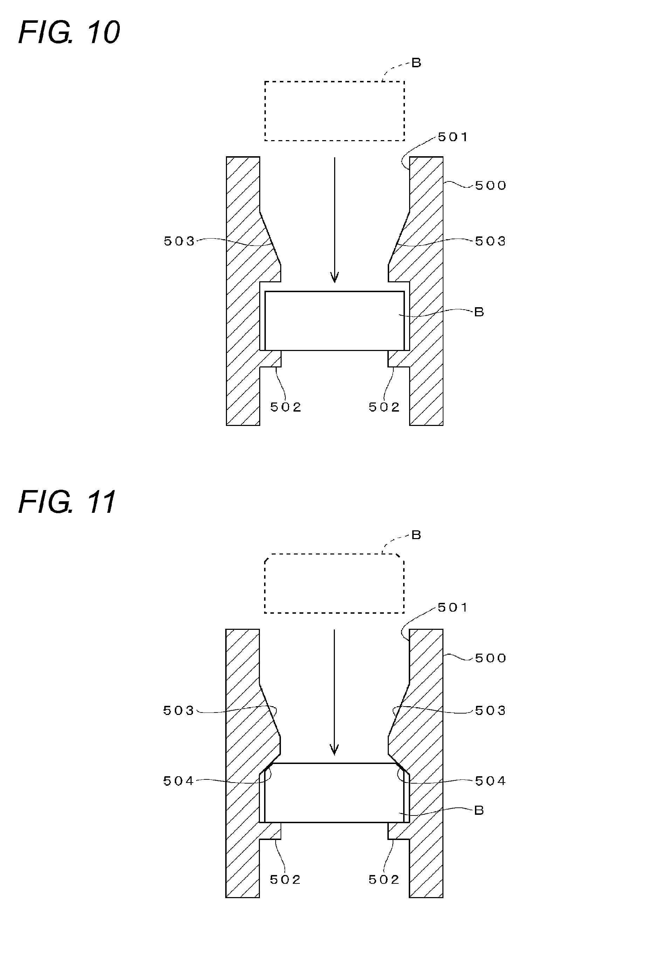

For example, in the case where an object to be supported by an edge portion is fixed in the same manner as an optical lens, there is generally employed a method of putting the edge portion of the object into a portion between two members and supporting the edge portion as shown in Fig. 10.

In the example of Fig. 10, an object B to be fixed is inserted from an opening portion 501 of a case body having a front surface opened and is fixed in a position having a predetermined height in the case body. For the fixation, a support table portion 502 protruding along a thickness of a wall part is provided in a plurality of places on an internal wall surface of a peripheral wall portion 500 of the case body, and furthermore, engaging portions 503 are provided opposite to each other in forward parts of the support table portions 502 apart from each other at a predetermined distance, respectively. The peripheral wall portion 500 is integrally formed by a material having elasticity together with the support table portion 502 and the engaging portion 503. Moreover, the engaging portion 503 is formed with gradual increase in a protrusion width with increase in distance from the opening portion 501. In some cases, the support table portion 502 or the engaging portion 503 is provided over an entire periphery of the peripheral wall portion 500.

The engaging portion 503 is pressed outward by the object B inserted from the opening portion 501 and is thus deformed outward together with a body of the peripheral wall portion 500, and at the same time, guides the object B to the support table portion 502. By a variation in the protrusion width of the engaging portion 503, a displacement amount of the peripheral wall portion 500 is gradually increased when the object B approaches the support table portion 502. Therefore, immediately before contact of the object B and the engaging portion 503 is cancelled, a large clearance is generated between a wall surface provided below the engaging portion 503 and the object B.

When the contact of the object B and the engaging portion 503 is cancelled, the peripheral wall portion 500 is quickly returned to its original state so that a back face of the object B is supported on the support table portion 502, and furthermore, the engaging portion 503 is positioned in a forward part of a front surface thereof. In this example, slight room is provided in a space between the support table portion 502 and the engaging portion 503. For this reason, a great vibration is generated when the deformed peripheral wall portion 500 returns to its original state, and the peripheral wall portion 500 strongly abuts against the object B so that a snapping sound is made.

Accordingly, with the generation of the vibration or the sound, an operator can recognize that the fixation of the object B is completed and can end the operation.

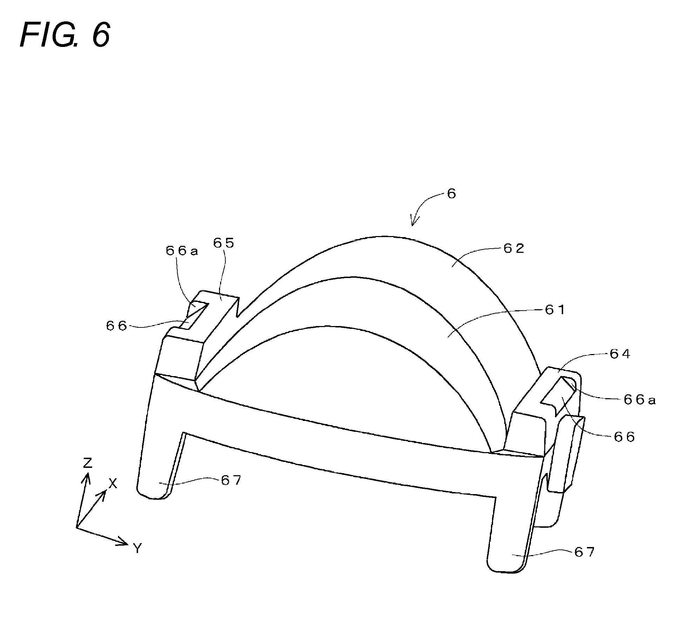

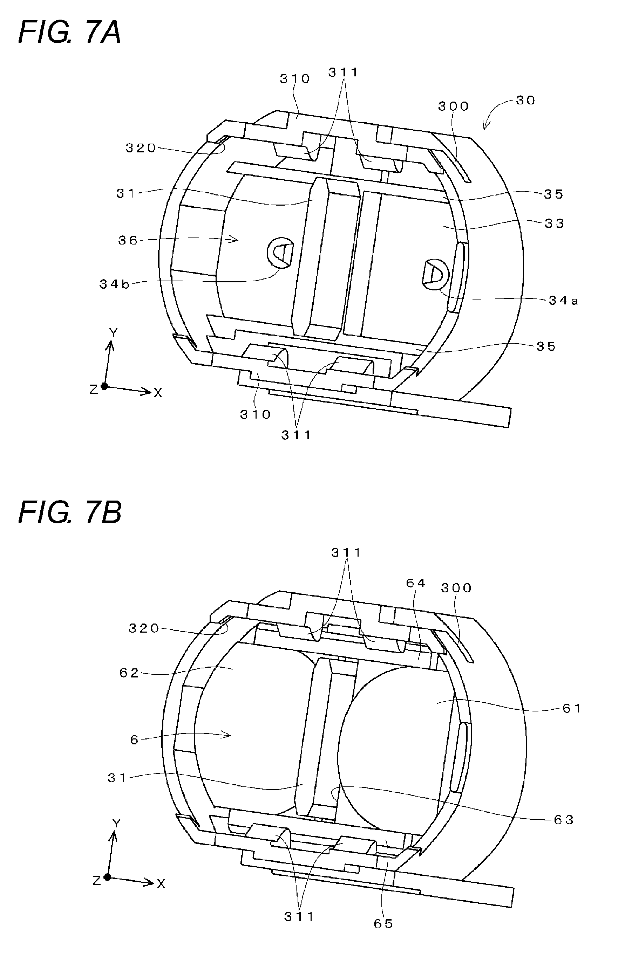

The prior art document disclosing that an optical lens is fixed by a fixing structure similar to the example described above includes Japanese Unexamined Patent Publication No. 2001-240167, for example. Japanese Unexamined Patent Publication No. 2001-240167 describes that a step is provided on the edge of the bottom part in the lens housing portion to form the support portion of the lens body, and furthermore, the snap-fit portion having flexibility is provided in the vicinity of the opening portion of the front surface to interpose and fix the edge part (flange part) of the lens body between the support portion and the snap-fit portion (see paragraphs 0092 to 0103, Figs. 6, 7A, 7B, and the like).

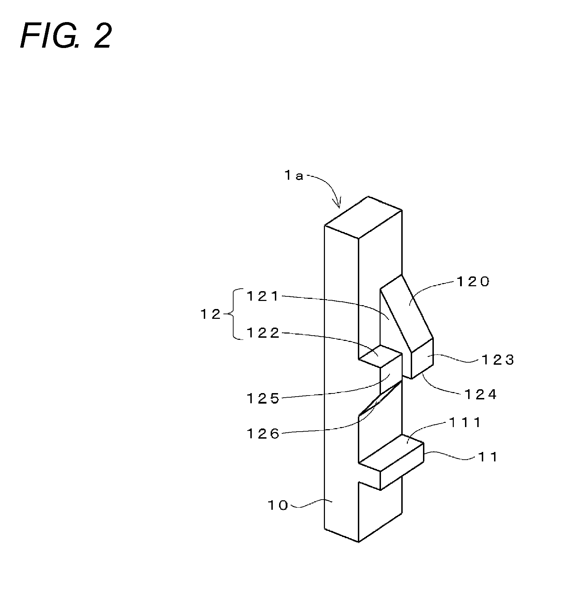

Moreover, Japanese Unexamined Patent Publication No. 2001-91810 describes that the projecting portion which is elastically deformable in the radial direction of the lens or the spring portion (protrusion) which is elastically deformable in the direction of the optical axis is formed on the rear edge of the lens frame holding the lens, and when the lens frame is inserted into the fixing tube of the lens-barrel, the spring portion abuts on the step portion formed in the inner peripheral part of the fixing tube and the projecting portion is fitted in the recessed portion formed on the inner peripheral surface of the fixing tube to thereby fix the lens frame. Furthermore, Japanese Unexamined Patent Publication No. 2001-91810 describes that the completion of the fitting of the projecting portion into the recessed portion can be confirmed by the generation of the sound in the fitting and the backlash in the direction of the optical axis of the lens frame is removed by the action of the spring portion which is deformable in the direction of the optical axis (see paragraphs 0020 to 0031, Fig. 2, and the like).

According to the fixing structure illustrated in Fig. 10, an operator can attach the object B by a simple operation of inserting the object B to be fixed from the opening portion 501 and pressing the object B. Moreover, it is possible to end the attaching operation by setting, as a guide, the vibration or sound generated upon the cancellation of the contact of the object B and the engaging portion 503 and restoration of the peripheral wall portion 500 or the engaging portion 503 into the original position. Therefore, it is possible to prevent the attachment from being incomplete.

However, with the above fixing structure, the distance between the support table portion 502 and the engaging portion 503 is set to be greater than the thickness of the object B in order to maintain the clearance for generating the vibration or sound. For this reason, the object B has a backlash between both of them so that complete fixation cannot be carried out. Therefore, in the case where positioning with high precision is required, it is hard to apply such a fixing structure.

Fig. 11 shows an example in which the positioning of the object is considered to be important and the fixing structure of Fig. 10 is improved. In this example, an inclined surface 504 is formed on a rear end of the engaging portion 503 and an edge part on a front surface side of the object B is obliquely cut out. The inclined surface 504 is inclined in a direction separating from the object B with gradual approach to the support table portion 502. Moreover, the distance between the support table portion 502 and the engaging portion 503 is also reduced more greatly than that in the example of Fig. 10. Consequently, when the object B is supported on the support table portion 502, the inclined surface 504 of the engaging portion 503 abuts on the notch surface of the object B.

According to the above structure, the object B is interposed and fixed between the support table portion 502 and the engaging portion 503. Therefore, it is possible to stably support the object B without occurrence of a backlash. However, with this structure, a clearance is hardly generated between the object B and the inclined surface 504 before or after the passage of the object B through the engaging portion 503. Consequently, the engaging portion 503 or the peripheral wall portion 500 has small force upon return so that the vibration or sound is hardly generated. For this reason, the operator recognizes the completion of the fixation with difficulty. Thus, there is a fear that the fixing operation may end with incomplete fixation.

Referring to the above problems, in the invention described in Japanese Unexamined Patent Publication No. 2001-91810, the sound indicating the end of the attachment is made, and furthermore, the backlash of the object can be removed by the spring portion which is deformable in the direction of the optical axis (the direction of the movement of the object to be fixed). However, with the fixing structure disclosed in Japanese Unexamined Patent Publication No. 2001-91810, it is necessary to align both the very small spring portion 82 formed on the rear edge of the object and the very small step portion (protruded portion) 86 in the inner peripheral part of the fixing tube such that the spring portion 82 abuts on the step portion 86 (see paragraph 0027 and Fig. 2 in Japanese Unexamined Patent Publication No. 2001-91810). Consequently, the burden of the operator is increased. In addition, the structure is also complicated. Furthermore, if the operator is inexperienced, the operator proceeds with the operation in a state in which the abutment is incomplete. As a result, there is also a fear that the fixation may be incomplete.

US 2005/0243443 A1 discloses a method for fixing an optical member of an optical unit including the optical member and a holding member is provided. The holding member includes positioning portions for positioning the optical member. The optical member and the holding member are fixed to each other upon laser welding of a plurality of locations of the holding member other than the positioning portions.

US 2005/0249549 A1 discloses a first annular frame that is formed on the bottom surface of an engine cover. A mount rubber of columnar shape is inserted into the first annular frame. Projections of the mount rubber are fitted into holes of the first annular frame. A through hole is formed in the mount rubber. An engagement projection is formed on the inner surface of the through hole. An adapter has a small-diameter part formed in the vicinity of the top end and a predetermined distance away from the top end toward the root thereof. The adapter has a flange formed below the smaller-diameter part. The top end part of the adapter is inserted into the through hole of the mount rubber to fit the engagement projection into the small-diameter part and bring the flange into abutment on the bottom surface of the mount rubber.

EP 1 223 749 A1 discloses an image pickup device provided on a base board, comprising an image pickup element provided on the base board and including a photoelectrically converting section in which pixels are arranged, a peripheral surface formed around the photoelectrically converting section and a side surface crossing the peripheral surface; an optical member including a lens section to form an image of an object onto the photoelectrically converting section of the image pickup element, a leg section to support the lens section and a contact surface to be brought in contact with the image pickup element, wherein the lens section, the leg section and the contact surface are made in a single body.; The optical member is mounted on the image pickup element such that the contact surface is brought in contact with the peripheral surface or with a surface member when the surface member is provided on the peripheral surface.

JP 2004-44281A discloses a sensor case and the filter that are integrally molded, the sensor body being inserted into the sensor case. Then engaging projections are formed on the sensor case, for engaging with the fastening member, and the sensor case and the fastening member cooperatively pinch the casing, to thereby fix the sensor to the casing. The fastening member has snap-fitting pieces, and therefore the sensor is easily attached to/detached from the casing.

### SUMMARY

In view of the above problems, it is an object of the present invention to enable stable fixation of an object by a simple operation and easier distinction of completion of the fixation through a vibration or sound.

Furthermore, it is a second object of the present invention to enable fixation of an object without backlash by a simple structure.

In accordance with one aspect of the present invention, a fixing structure is provided that has the features recited in claim 1. The open end face may be configured such that it is not in contact with the object in a state in which the object is fixed by the fixing structure.

For example, when a passage through which the object passes is formed by the support wall portion of the fixing structure having the above structure, the passage is narrowed in a place where the guiding portion protrudes, and the movement of the object is thus disturbed. However, when pressing force from this side of the guiding portion toward the support table portion is applied to the object, the guiding portion pressed by the object is deformed together with an elastic member body so that the passage is enlarged and the object can be moved toward the support table portion. In the present invention, at least a part of the guiding portion is opened toward the support table portion, and the abutting surface inclined to reduce a protrusion width with gradual approach to the support table portion is provided in a place of the abutting portion which abuts on the object. Therefore, a clearance is generated between the object and the abutting surface immediately before the object completely passes through the guiding portion. In addition, the abutting surface is also displaced in an outward direction depending on the deformation of the support wall portion body. Consequently, it is possible to enlarge the clearance.

By the presence of the clearance, the support wall portion is moved vigorously when the contact of the object and the guiding portion is cancelled. Therefore, it is possible to fix the object by causing the abutting portion to abut against the object by strong force and interposing the edge part of the object between the abutting surface and the support table portion. Consequently, a vibration is generated on the support wall portion or the object, and furthermore, a snapping sound can be made.

In one embodiment of the above fixing structure, the support wall portion is a peripheral wall portion of a case body having a front surface opened and a slit hole is formed along an opening edge on the peripheral wall portion apart from the opening portion by a predetermined distance. The support table portion is provided along a thickness of a rear edge of the slit hole, and at least one set of guiding and abutting portions is provided on an internal wall surface between the slit hole of the peripheral edge portion and the opening portion. With this structure, the portion between the slit hole of the peripheral wall portion and the opening portion can be caused to function as a spring portion having great elastic force. Therefore, it is possible to sufficiently increase a displacement amount through the pressing force of the object, thereby enlarging a clearance between the abutting surface and the object.

Moreover, in the above embodiment, in the case where an object having such a size as to close an opening portion is attached, it is possible to form the slit hole in at least two places of the peripheral wall portion of the case body, and to provide at least one set of guiding and abutting portions on an internal wall surface between the slit hole of the peripheral wall portion and the opening portion for each slit hole. Consequently, it is possible to fix a plurality of places of the edge portion of the object, thereby supporting the object in a stable posture.

With the fixing structure according to another embodiment of the present invention, the support wall portion is a columnar body or a wall body which has a support surface of a predetermined area, and the support table portion, the guiding portion, and the abutting portion are integrally provided on the support surface. With this structure, similarly, it is possible to guide the object to the support table portion while deforming the cylinder or the wall body constituting a moving passage for the object in an outward direction of the passage, thereby interposing and fixing the edge portion of the object between the support table portion and the abutting surface. There is no particular limitation regarding the cross-sectional shape of the columnar body, and the columnar body may have a rectangular cross-section, for example.

With the fixing structure according to yet another embodiment of the present invention, a place of the guiding portion which comes in contact with the object includes an inclined surface which is inclined to increase a protrusion width with respect to the support wall portion body with gradual approach to the support table portion.

According to this structure, it is possible to increase the displacement amount of the support wall portion with the movement of the object. Therefore, it is possible to sufficiently enlarge the clearance between the object and the abutting surface immediately before the contact with the guiding portion is cancelled. Consequently, it is possible to easily generate a vibration or a sound.

In accordance with another aspect of the present invention, an optical device includes a case body having an open front surface, and a lens member as an object to be fixed, which is inserted from an opening portion on the front surface of the case body and is fixed into the case body by a fixing structure as described above. The case body is provided with the support table portion in a thickness direction of a wall surface portion thereof, and a guiding portion and an abutting portion are provided in at least two places in a part of the case body between the place of the support table portion of the peripheral wall portion and the open front surface, the guiding portion being disposed integrally with an internal wall surface of the peripheral wall portion in protrusion and being pressed by a lens member inserted from the opening portion to guide the lens member towards the support table portion while deforming together with the peripheral wall portion body, and the abutting portion abutting on an edge portion on a front surface side of the lens member moved to the support table portion through the guiding portion.

The guiding portion has an open end face which is linked to at least a part of a place coming into contact with the lens member inserted from the opening portion and moved towards the support table portion, and faces towards the support table portion. The abutting portion is provided integrally with the peripheral wall portion body or the guiding portion so as to protrude in an inward direction with respect to the peripheral wall portion body and is provided with an abutting surface which is inclined to reduce a protrusion width from the peripheral wall portion body with gradual approach to the support table portion in a place where the abutting portion comes into contact with the lens portion.

According to this structure, the edge of the lens member is fixed into the plurality of places of the internal wall surface of the peripheral edge portion in the case body by the fixing structure described above. Therefore, it is possible to fix the lens member easily and correctly.

According to one embodiment of the above optical device, a slit hole along an opening edge is formed apart from the opening portion of the front surface by a predetermined distance in at least two places of the peripheral wall portion of the case body, and the support table portion is provided along a thickness of a rear edge of the slit hole. Moreover, at least one set of guiding and abutting portions is provided on an internal wall surface between the slit hole of the peripheral wall portion and the opening portion for each slit hole.

According to the above structure, the portion between each slit hole and the opening portion can be caused to function as a spring portion having great elastic force. Therefore, it is possible to sufficiently cause each spring portion to deform depending on the insertion of the lens member, thereby enlarging the clearance between the abutting surface and the lens member. Accordingly, a vibration or a sound can easily be generated when the contact of the lens member and the engaging portion is cancelled. Moreover, if the opening portion is set to be slightly small with respect to the lens member, it is possible to support the lens member more stably by energizing force of the spring portion.

According to the present invention, the object to be fixed is inserted and pressed in until a snapping sound is made. Consequently, the object can be fixed correctly. Therefore, it is possible to easily carry out a fixing operation and to prevent a fixing state from being incomplete. Moreover, it is possible to fix the object without backlash by a simple structure, that is, a combination of the guiding portion having the open end face and the inclined abutting surface. Thus, it is possible to provide, at a low cost, a suitable structure for fixing an object which is demanded to be positioned with high precision, for example, a lens member or the like.

### BRIEF DESCRIPTION OF THE DRAWINGS

Fig. 1 is a perspective view showing an embodiment of a fixing structure according to the present invention;
Fig. 2 is a perspective view showing a structure of a cylinder 1a in Fig. 1;
Figs. 3A to 3D are views schematically showing a change in a posture of the cylinder 1a with movement of an article;
Figs. 4A and 4B are views schematically showing a variant of a guiding portion and a variant of an abutting surface;
Fig. 5 is a perspective view showing an internal structure of a photoelectric sensor in which a fixing structure according to a second embodiment is introduced;
Fig. 6 is a perspective view showing a structure of a lens member to be fixed;
Figs. 7A and 7B are perspective views illustrating a contrast between a lens holder to which a lens member is not attached and a lens holder to which the lens member is attached;
Fig. 8 is a perspective view showing the attachment state of the lens member, a part of the lens holder being taken away;
Figs. 9A and 9B are perspective views showing an enlarged fixing structure in the lens holder, illustrating a contrast between the state in which the lens member is not attached and the state in which the lens member is attached;
Fig. 10 is a schematic sectional view showing an example of a conventional fixing structure; and
Fig. 11 is a schematic sectional view showing an example of improvement in the fixing structure of Fig. 10.

### DETAILED DESCRIPTION

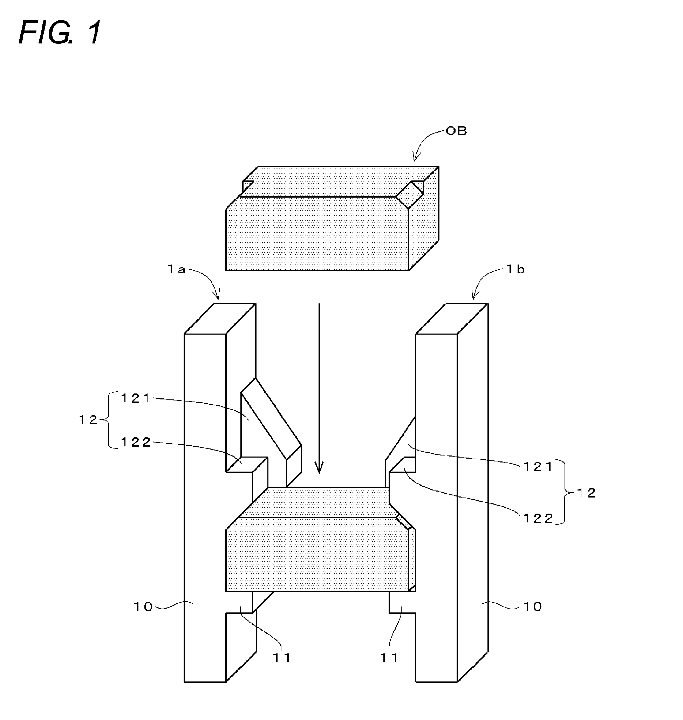

Fig. 1 shows an embodiment of a fixing structure according to the present invention together with an object OB to be fixed.

The object OB according to this embodiment is supported between a pair of bars or columnar bodies, which are referred to in the following as cylinders 1a and 1b having elasticity. The cylinders 1a, 1b, at least partially, may have rectangular cross-sections. A support table portion 11 and an engaging portion 12 are formed in a projecting state over a surface of each of the cylinders 1 a and 1 b (an opposed surface to the other cylinder). The cylinders 1 a and 1 b are provided opposite to each other at an interval corresponding to a width of the object OB with the engaging portion 12 disposed in an upper part. The engaging portion 12 is obtained by coupling a guiding portion 121 extending in a longitudinal direction of a cylinder body 10 and an abutting portion 122 shorter than the guiding portion 121. The object OB is inserted between the cylinders 1a and 1b from above, and both ends are fixed in an interposed state between the support table portions 11 and the abutting portions 122 of the engaging portions 12 in the cylinders 1a and 1b.

In the following, a surface of the object OB to be fixed which is supported on the support table portion 11 will be referred to as a back face and a surface facing upward will be referred to as a front surface.

Fig. 2 shows a structure of the cylinder 1a which is positioned on a left side of Fig. 1. The other cylinder 1b has the same structure as the cylinder 1a except that it takes a line symmetrical shape with respect to the cylinder 1a. For this reason, the same reference numerals as those in the cylinder 1a are applied to the cylinder 1b.

Each of the cylinders 1a and 1b according to this embodiment is obtained by integrally forming the cylinder body 10, the support table portion 11, and the engaging portion 12 of a resin or metal having elasticity. The support table portion 11 has a support surface 111 in an orthogonal direction to the cylinder, and is provided over a full width of the cylinder body 10. A protrusion width of the support surface 111 with respect to the cylinder body 10 is set depending on a range in which the object OB can be supported.

The guiding portion 121 takes such a shape that one of ends on an inclined surface side of a triangle pole is cut out, and is provided with a notch surface 123 disposed in a lower part such that a protrusion width of an inclined surface 120 with respect to the cylinder body 10 is increased with gradual approach to the support table portion 11. The inclined surface 120 and the notch surface 123 come into contact with the object OB. Moreover, an open end face 124 facing toward the support surface 111 is formed on a lower end of the guiding portion 121. A distance between the open end face 124 and the support surface 111 is set to be slightly greater than a height of the object OB.

The abutting portion 122 also takes such a shape that a part on an inclined surface side of a triangle pole is cut out. A rate of the notch portion with respect to the entire triangle pole is set to be high and a notch surface 125 having an almost equal size to the notch surface 123 of the guiding portion 121 is formed. The abutting portion 122 is provided with an inclined surface 126 disposed in a lower part with a height of the notch surface 125 conforming to the notch surface 123 of the guiding portion 121 (a protrusion width of the notch surface 125 with respect to the cylinder body 10 is smaller than that of the notch surface 123). Accordingly, the inclined surface 126 of the abutting portion 122 is set to an inclined state in which the protrusion width with respect to the cylinder body 10 is reduced more greatly with gradual approach to the support table portion 11 in a position lower than the guiding portion 121. The inclined surface 126 functions as an abutting surface which abuts on an edge portion at the front surface side of the object OB which has passed through the guiding portion 121.

The object OB to be fixed according to this embodiment takes a shape of a cube. Two corner portions having an opposing relationship in a transverse direction at the front surface side are obliquely cut out corresponding to the structures of the cylinders 1a and 1b.

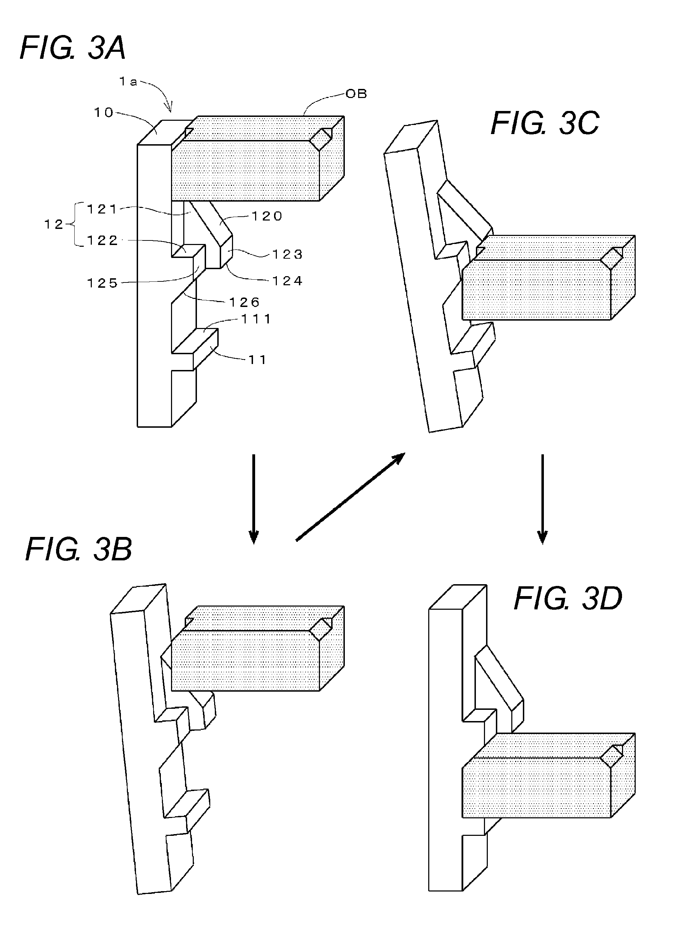

Figs. 3A to 3D schematically show a change in a posture of the cylinder 1a with the movement of the object OB. In Figs. 3A to 3D, only Fig. 3A shows reference numerals. Moreover, the other cylinder 1b (not shown) is deformed toward a side opposite to the cylinder 1a.

When an operator to carry out fixation inserts the object OB into a space between the cylinders 1a and 1b and presses the object OB downward in the figure, a part of the object OB is brought into contact with the inclined surface 120 of the guiding portion 121 in each of the cylinders 1a and 1b so that each of the cylinders 1a and 1b is pressed outward by the object OB and an interval between the cylinders 1a and 1b is enlarged (Fig. 3A to Fig. 3B). Accordingly, the object OB is moved downward while maintaining a contact state with the inclined surface 120 and the notch surface 123. When the object OB is moved, the protrusion width of the guiding portion 121 is gradually increased. Therefore, a displacement amount of each of the cylinders 1a and 1b in a direction opposite to the object OB is correspondingly gradually increased.

The abutting surface 126 of the abutting portion 122 is positioned lower than the open end face 124 on a termination of the guiding portion 121, and is inclined such that the protrusion width with respect to the cylinder body 10 is reduced more greatly with gradual approach to the support table portion 11. Therefore, when most part of the object OB passes through the guiding portion 121 so that the displacement amount of the cylinder 1a is increased, a large clearance is generated between the abutting surface 126 or a wall surface provided thereunder and the object OB (Fig. 3C).

When an upper end of the object OB is brought to be positioned below the guiding portion 121, the contact of the object OB and the guiding portion 121 is canceled so that the cylinders 1 a and 1 b are vigorously moved in order to return to its original state. By this motion, the clearance between the abutting surface 126 and the object OB is cancelled at once so that the support surface 111 of the support table portion 11 or the upper wall surface comes into contact with the back face and the side face of the object OB, and furthermore, the abutting surface 126 of the abutting portion 122 is brought into an abutting state on the notch surface of the object OB (Fig. 3D). Accordingly, both ends of the object OB are brought into an interposed state between the support table portions 11 of the cylinders 1a and 1b and the abutting portions 122 so that the object OB is fixed. The open end face 124 of the guiding portion 121 after the fixation is positioned slightly above the object OB.

As described above, the abutting surface 126 is greatly separated from the object OB immediately before the contact of the guiding portion 121 and the object OB is cancelled. However, the abutting surface 126 is caused to strongly abut against the object OB by a quick return of the cylinders 1a and 1b upon the cancellation of the contact. Therefore, at this time, a snapping sound can be made together with a vibration.

Therefore, the operator inserts the object OB between the cylinders 1a and 1b to press in the object OB until the vibration and the snapping sound are generated, thereby enabling accurate fixation of the object OB.

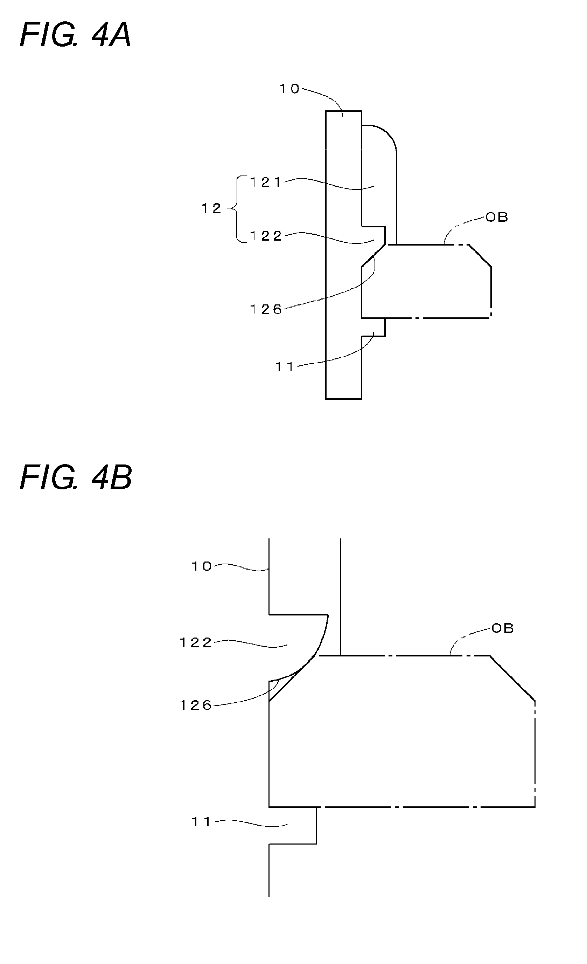

In the above embodiment, the protrusion width of the main part of the guiding portion 121 is increased with gradual approach to the support table portion 11. However, if the guiding portion 121 protrudes more sufficiently greatly than the abutting portion 122 or the elasticity of the cylinder body 10 is enhanced, the protrusion width of the upper end of the guiding portion 121 may be changed gently to obtain a certain protrusion width of the main part as shown in Fig. 4A. Moreover, the abutting surface 126 is not restricted to be a straight inclined surface but may be a projecting surface as shown in Fig. 4B. Furthermore, a portion of the object OB which abuts on the abutting surface is not restricted to the notch surface, but may be a curved surface or angular as long as the abutting state can be stabilized.

Moreover, in the above embodiment, the abutting surface 126 of the abutting portion 122 is disposed in a place closer to the support table portion 11 than the open end face 124 of the guiding portion 121. However, in the case where an object having no notch of the edge part or an object taking such a shape that an edge part projects more greatly than the other portions, the abutting surface 126 and the open end face 124 may be disposed in positions having almost equal heights to each other. In addition, it is also possible to provide a slight clearance between the guiding portion 121 and the abutting portion 122 without linking both of them.

In the above embodiment, the cylinders 1 a and 1 b in which the support table portion 11 and the engaging portion 12 are provided integrally with the cylinder body 10 in the protrusion state are formed by the resin having elasticity. However, it is also possible to employ a structure in which an elastic member having an engaging portion is coupled to the support table portion 11 formed by an inelastic member. Furthermore, a fixing mode is not restricted to the pair of cylinders 1a and 1b, and it is also possible to apply the same fixing structure as that in the above embodiment also in the case where an object is supported on a wall surface in a cantilever manner.

Moreover, also in the case where an object having a size corresponding to an opening portion of a case body with a front surface opened is fixed to an internal wall surface of a peripheral wall portion of the case body, it is possible to attach the object in a stable posture by providing a support table portion and an engaging portion having the above structures in a plurality of places of the internal wall surface. Furthermore, the support table portion may be provided over an entire periphery of the internal wall surface of the peripheral wall portion. In addition, if elastic force of a place including the engaging portion can be secured, the engaging portion may also be provided over the entire periphery of the internal wall surface.

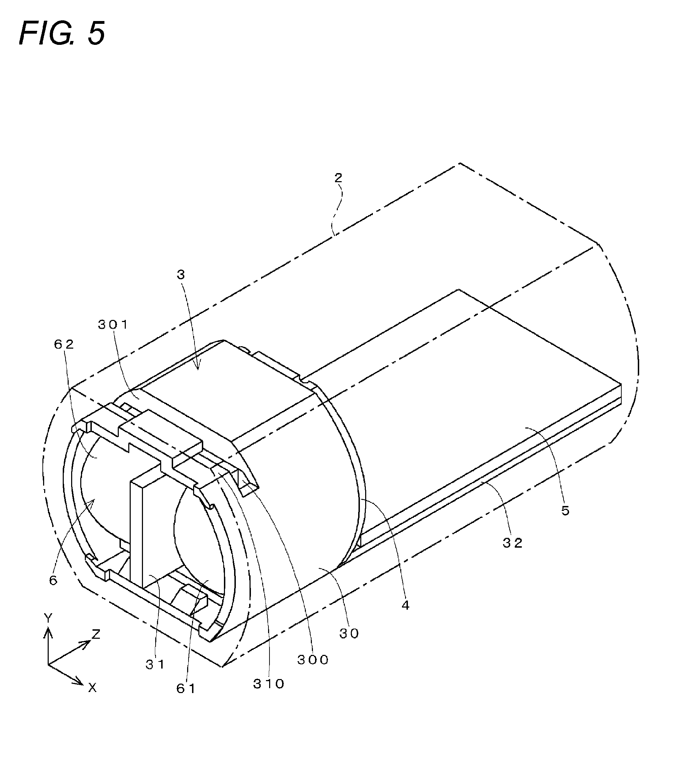

Fig. 5 shows an internal structure of a photoelectric sensor as an example of the introduction of the fixing structure according to the present invention. The photoelectric sensor according to this embodiment is a reflection type sensor in which a light projecting unit and a light receiving unit are integrated with each other, and takes a structure in which a holder 3 is incorporated. The holder 3 supports an optical system and a substrate in an inner part of a longitudinal case body 2 having front and rear parts opened. An opening portion on a front end of the case body 2 is closed with a translucent cover lens (not shown), and an opening portion on a rear end is closed with a cover member (not shown) having a connector.

The holder 3 is a resin molded product in which a substrate support portion 32 is provided integrally behind a lens holder 30 having a front surface opened, and is formed by a resin material having elasticity.

A lens member 6 having a pair of lenses 61 and 62 is attached to a vicinal position of the opening portion of the lens holder 30. The substrate support portion 32 extends along a bottom face of the case body 2, and a circuit board 5 is attached thereonto. The circuit board 5 is provided with a circuit pattern related to a light projecting process and a light receiving process.

In respective subsequent figures from Fig. 5, a Z axis is set along an optical axis of the lens holder 30, an axis in a direction of arrangement of the lenses 61 and 62 in two axes constituting an plane orthogonal to the Z axis is set to be an X axis, and the other axis is set to be a Y axis.

Fig. 6 shows a structure of the lens member 6 to be incorporated into the lens holder 30 of the photoelectric sensor. Moreover, Fig. 7A shows a state in which the lens holder 30 before the attachment of the lens member 6 is seen from a front side, and Fig. 7B shows a state in which the lens holder 30 with the lens member 6 attached thereto is seen in the same viewpoint as that in Fig. 7A.

The lens member 6 according to this embodiment has a structure in which the two lenses 61 and 62 are coupled to each other with a hole portion 63 interposed therebetween by means of a pair of narrow coupling portions 64 and 65. The coupling portions 64 and 65 are provided integrally with the lenses 61 and 62 along an entire length in a longitudinal direction of the lens member 6. Moreover, notch step portions 66 are formed by outward inclined surfaces in outer edge parts of front surfaces of the coupling portions 64 and 65, respectively. Moreover, leg portions 67 are provided in four corners of the lens member 6.

An internal holder 36 including a light shielding plate 33 having a light projecting window 34a and a light receiving window 34b is provided in the lens holder 30 with the light shielding plate 33 aligned with an XY plane. A wall portion 31 is erected in a central part of the light shielding plate 33. The wall portion 31 has a size which can be inserted into the hole portion 63 of the lens member 6. By the wall portion 31, a space in the lens holder 30 is divided into two parts, that is, a light guide path for light projection including the light projecting window 34a and a light guide path for light receipt including the light receiving window 34b.

A portion provided behind the light shielding plate 33 of the internal holder 36 is opened and a substrate 4 (see Fig. 5) for supporting the light projecting element and the light receiving element is attached to an open end face thereof. The light projecting element is positioned behind the light projecting window 34a and the light receiving element is positioned behind the light receiving window 34b.

When the lens member 6 is inserted from the opening portion of the lens holder 30 such that the wall portion 31 enters the hole portion 63 and is pressed therein, the lens member 6 is fixed in a state in which the lenses 61 and 62 are caused to face the front ends of the light guide paths respectively.

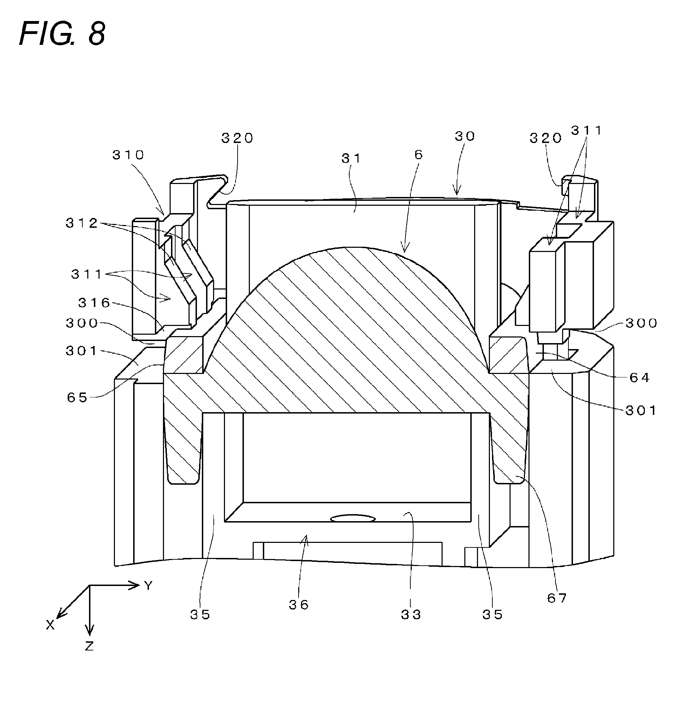

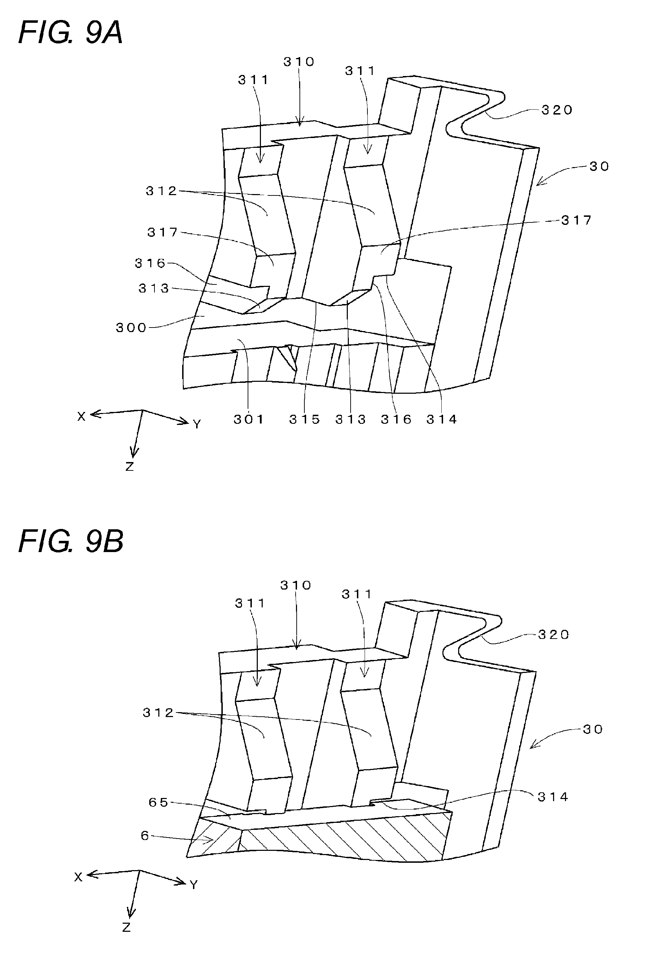

Fig. 8 illustrates an internal structure with a front edge facing upward, a right side portion of the lens holder 30 being taken away. Figs. 9A and 9B vertically illustrate a view (Fig. 9A) showing a state in which the fixing structure of a one side edge part of the lens holder 30 is further enlarged and the lens member 6 is not supported, and a view (Fig. 9B) showing a state in which the lens member 6 is supported.

In Figs. 8 and Figs. 9A and 9B, hatching is given to only the broken surface of the lens member 6.

The fixing structure according to this embodiment will be described in detail with reference to Figs. 6 to 9B.

In the lens holder 30 according to this embodiment, slit holes 300 and 300 are formed along opening edges in both side portions in an X-axis direction of the front end of the peripheral wall portion respectively. Although the lens holder 30 is formed by a resin having elasticity, particularly, a narrow portion 310 provided between the slit hole 300 and the opening portion is likely to be deformed in a Y-axis direction. The narrow portion 310 will be hereinafter referred to as a spring portion.

The spring portion 310 is formed in front end parts in the wall portions on both sides in the X-axis direction of the lens holder 30. The respective spring portions 310 and 310 are provided with a pair of engaging portions 311 and 311 projecting from internal wall surfaces, respectively. The engaging portions 311 and 311 are aligned with the engaging portions 311 and 311 on the wall surfaces at the opposite side with the light guide paths interposed therebetween, respectively.

Surfaces 301 and 301 provided along thicknesses of the rear edges of the slit holes 300 and 300 function as support table portions for supporting the lens member 6.

Four corners of the opening edge of the lens holder 30 project forward and V-shaped grooves 320 are formed in the projecting parts. These grooves 320 serve to support an optical filter (not shown).

As shown Fig. 9A, the front surface part of the engaging portion 311 according to this embodiment includes an inclined surface 312 and a surface 317. The inclined surface 312 is inclined such that a protrusion width from a body of the spring portion 310 is increased with gradual approach to the support table portion 301. The surface 317 is linked to a rear edge of the inclined surface 312 and has a certain protrusion width from the body of the spring portion 310. In this embodiment, a thickness portion between the surfaces 312 and 317 and the body of the spring portion 310, and the surfaces 312 and 317 functions as a guiding portion.

A half in a transverse direction of the surface 317 protrudes toward a rear side in which the support table portion 301 is provided, and an abutting surface 313 inclined outward is linked to the protruded portion. An open end face 314 facing toward the support table portion 301 is linked to a portion in which the surface 317 does not protrude, and an open end face 315 facing toward the support table portion 301 is also linked to the abutting surface 313. In this embodiment, a lower end including the abutting surface 313 of the engaging portion 311 and the open end face 315 functions as an abutting portion.

The abutting surface 313 and the open end face 314 are usually opposed to a clearance between a side wall portion 35 of the internal holder 36 and the lens holder 30.

The two engaging portions 311 and 311 provided on the same spring portion 310 are set to be line symmetrical with the abutting surfaces 313 and 313 facing inward, respectively. A distance between surfaces 316 and 316 linked to the abutting surfaces 313 and 313 at the side corresponds to a length of the notch step portions 66 of the coupling portions 64 and 65 in the lens member 6. Moreover, a distance between the open end face 314 and the support table portion 301 is set to be slightly greater than the entire thickness of the coupling portions 64 and 65, and a distance between the open end face 315 linked to the abutting surface 313 and the support table portion 301 is set to be a length corresponding to a thickness from the bottom faces of the coupling portions 64 and 65 to the notch step portions 66.

With the above structure, when the operator inserts the lens member 6 from the opening portion of the lens holder 30, the coupling portions 64 and 65 on both ends of the lens member 6 come into contact with the inclined surface 312 of each of the engaging portions 311. When the operator presses the lens member 6 from a front surface side, outward pressing force is applied to the engaging portion 311 through the lens member 6 so that the entire spring portion 310 including the engaging portion 311 is displaced outward. Accordingly, the lens member 6 is guided to the inclined surface 312 and the surface 317 provided thereunder and is thus moved to an inner part of the lens holder 30 while maintaining a state in which the respective coupling portions 64 and 65 are in contact with the respective engaging portions 311. By a variation in the protrusion width of the engaging portion 311, the displacement amount of the spring portion 310 is increased when the lens member 6 is moved to the inner part of the lens holder 30. Therefore, a large clearance is generated between the coupling portions 64 and 65 and the abutting surface 313 immediately before the contact of the surfaces 312 and 317 is cancelled.

When the back faces of the coupling portions 64 and 65 of the lens member 6 reach the support table portion 301, the leg portion 67 of the lens member 6 enters a clearance between the lower wall surface of the support table portion 301 and the side wall portion 35 of the internal holder 36 (see Fig. 8). Consequently, the lens member 6 is supported with the back face along the XY plane. Moreover, almost at the same time the supporting state is established, the contact of the coupling portions 64 and 65 and the surfaces 312 and 317 is cancelled so that the spring portion 310 is displaced in a returning direction, and the abutting surface 313 of the engaging portion 311 abuts against the notch step portions 66 and 66 of the coupling portions 64 and 65 and the lens member 6 is thus pressed from both sides. At this time, the surface 316 on the side of the abutting surface 313 is also brought into an abutting state on an internal wall surface 66a of the notch step portion 66 (see Fig. 6) so that the abutting state of the abutting surface 313 and the coupling portions 64 and 65 is stabilized. Accordingly, the coupling portions 64 and 65 are brought into the interposed state between the support table portion 301 and the engaging portion 311 so that the lens member 6 is fixed.

When the contact of the lens member 6 and the surfaces 312 and 317 is cancelled, the spring portions 310 and 310 are vigorously moved such that the clearance between the abutting surface 313 of the engaging portion 311 and the coupling portions 64 and 65 is cancelled at once. Therefore, the abutting surface 313 and the surface 316 adjacent thereto abut against the coupling portions 64 and 65 by great force so that a vibration or a snapping sound is generated.

Accordingly, the operator can correctly attach the lens member 6 by the method of inserting the lens member 6 from the opening portion of the lens holder 30 and pressing the lens member 6 until a vibration or a snapping sound is generated.

In the example of Figs. 6 to 9B, the lens member 6 having the structure in which the pair of lenses 61 and 62 is coupled is set to be a fixing target. Therefore, the two engaging portions 311 are assigned to the lenses 61 and 62 respectively, and these are provided opposed to the internal wall surfaces on both sides of the case body 30. However, in the case where a lens member including a single lens is fixed, it is also possible to dispose the engaging portions 311 on the internal wall surfaces at both sides of the case body one by one. However, in the case where a large-sized lens member is fixed, it is preferable to dispose at least three engaging portions 311 so as to be well-balanced in a circumferential direction of the case body.

Moreover, the fixing structure shown in Figs. 6 to 9B is not restricted to the lens member, but it can be applied to fix general objects to be fixed into the vicinity of the opening portion in order to close an opening portion of a case body having a front surface opened.

## Claims

1. A fixing structure comprising:
an object (OB, 6) to be fixed, the object (OB, 6) having a front surface and a back surface; and
a pair of support wall portions (10, 310) which are arranged in opposition to the object (OB, 6), at least one of the support wall portions (10, 310) being elastically deformable and being provided with:
a support table portion (11, 301) for supporting the back surface of the object (OB) to be fixed;
a guiding portion (121) which is provided integrally with the support wall portion (10, 310) and protruding from the support wall portion (10, 310), the guiding portion (121) including an inclined surface (120, 312) whose protrusion width from the support wall portion (10, 310) increases with gradual approach to the support table portion (11, 301), and an open end face (124, 314) that is positioned nearer to the support table portion (11, 301) than the inclined surface (120, 312) and faces toward the support table portion (11); and
an abutting portion (122) that is provided integrally with the support wall portion body or the guiding portion (121) so as to protrude in a direction identical to the guiding portion (121) with respect to the support wall portion (10, 310), and is provided with an abutting surface (126) which is inclined in a place where the abutting portion (122) abuts on the object (OB) so as to reduce a protrusion width from the support wall portion (10, 310) with gradual approach to the support table portion (11),
**characterized in that** the abutting surface (126) of the abutting portion (122) is disposed closer to the support table portion (11, 301) than the open end face (124, 314) of the guiding portion (121), and
notch step portions (66) abutting against the abutting surface (126) are formed in an outer edge of the front surface of the object (OB, 6).

2. The fixing structure of an object according to claim 1, wherein
a protrusion width of the abutting portion (122) from the support wall portion (10, 310) is smaller than a protrusion width of the guiding portion (121) from the support wall portion (10, 310).

3. The fixing structure of an object according to claim 1, wherein
the support wall portion (10, 310) is a peripheral wall portion of a case body (30) having a front surface opened and a slit hole (300) is formed along an opening edge on the peripheral wall portion, the slit hole (300) being spaced apart from the opening portion by a predetermined distance,
the support table portion (11, 301) is provided along a rear edge of the slit hole (300), and
at least one set of guiding and abutting portions is provided on an internal wall surface between the slit hole of the peripheral wall portion and the opening portion.

4. The fixing structure of an object according to claim 1, wherein
the support wall portions are columnar bodies or wall bodies which have a support surface of a predetermined area, and
support table, guiding, and abutting portions are integrally provided on the support surface.

5. An optical device comprising the fixing structure of an object according to any of claims 1 to 4.

## Patentansprüche

1. Fixierstruktur, die Folgendes aufweist:
ein zu fixierendes Objekt (OB, 6), wobei das Objekt (OB) ein vordere Fläche und eine hintere Fläche aufweist; und
ein Paar Stützwandabschnitte (10, 310), die gegenüber dem Objekt (OB, 6) angeordnet sind, wobei mindestens einer der Stützwandabschnitte (10, 310) elastisch verformbar ist und Folgendes aufweist:
einen Stütztableauabschnitt (11, 301) zum Stützen der hinteren Fläche des zu fixierenden Objetks (OB);
einen Führungsabschnitt (121), der einstückig mit dem Stützwandabschnitt (10, 310) ist und von dem Stützwandabschnitt (10, 310) hervorragt, wobei der Führungsabschnitt (121) eine geneigte Fläche (120, 312), deren Vorsprungbreite vom Stützwandabschnitt (10, 310) mit zunehmender Annäherung an den Stütztableauabschnitt (11, 301) zunimmt, und eine offene Endfläche (124, 314) aufweist, die näher am Stütztableauabschnitt (11, 301) angeordnet ist als die geneigte Fläche (120, 312) und dem Stütztableauabschnitt (11, 301) gegenüberliegt; und
einen Anlageabschnitt (122), der einstückig mit dem Stützwandabschnitt oder dem Führungsabschnitt (121) vorgesehen ist und in derselben Richtung wie der Führungsabschnitt (121) vom Stützwandabschnitt (10, 310) hervorragt, und eine Anlagefläche (126) aufweist, die an einem Ort, an dem das Objekt (OB) an dem Anlageabschnitt (122) anliegt, geneigt ist, wobei eine Vorsprungbreite vom Stützwandabschnitt (10, 310) mit zunehmender Annäherung an den Stütztableauabschnitt (11) reduziert wird;
**dadurch gekennzeichnet, dass** die Anlagefläche (126) des Anlageabschnitts (122) näher an dem Stütztableauabschnitt (11, 301) vorgesehen ist als die offene Endfläche (124, 314) des Führungsabschnitts (121), und
kerbenartige Stufenabschnitte (66), die an der Anlagefläche (126) anliegen, in einer äußeren Kante einer Frontfläche des Objekts (OB, 6) ausgebildet sind.

2. Fixierstruktur zum Fixieren eines Objekts gemäß Anspruch 1,
wobei eine Vorsprungsbreite des Anlageabschnitts (122) vom Stützwandabschnitt (10, 310) kleiner ist als eine Vorsprungsbreite des Führungsabschnitts (121) vom Stützwandabschnitt (10, 310).

3. Fixierstruktur zum Fixieren eines Objekts gemäß Anspruch 1,
wobei der Stützwandabschnitt (10, 310) ein außen liegender Wandabschnitt eines Gehäusekörpers (30) mit einer geöffneten vorderen Fläche ist, wobei ein Schlitz (300) entlang einer Öffnungskante an dem außen liegender Wandabschnitt ausgebildet ist, wobei der Schlitz (300) mit einem bestimmten Abstand von dem Öffnungsabschnitt beabstandet ist,
wobei der Stütztableauabschnitt (11, 301) entlang einer Hinterkante des Schlitzes (300) vorgesehen ist, und
mindestens ein Satz Führungs- und Anlageabschnitte auf einer inneren Wandfläche zwischen dem Schlitz des außen liegenden Wandabschnitts und dem Öffnungsabschnitt vorgesehen ist.

4. Fixierstruktur zum Fixieren eines Objekts gemäß Anspruch 1,
wobei die Stützwandabschnitte Säulen oder Wänd sind, die eine Stützfläche mit einer bestimmten Fläche aufweisen, und
die Stütztableau-, Führungs- und Anlageflächen einstückig auf der Stützflüche vorgesehen sind.

5. Optische Vorrichtung mit einer Fixierstruktur zum Fixieren eines Objekts gemäß einem der Ansprüche 1 bis 4,

## Revendications

1. Structure de fixation comprenant :
un objet (OB, 6) à fixer, l'objet (OB, 6) ayant une surface avant et une surface arrière ; et
une paire de parties de paroi de support (10, 310) qui sont disposées en opposition à l'objet (OB, 6), au moins une des parties de paroi de support (10, 310) étant élastiquement déformable et étant pourvue de :
une partie de table de support (11, 301) pour supporter la surface arrière de l'objet (OB) à fixer ;
une partie de guidage (121) qui est prévue en une seule pièce avec la partie de paroi de support (10, 310) et fait saillie depuis la partie de paroi de support (10, 310), la partie de guidage (121) comprenant une surface inclinée (120, 312) dont la largeur de saillie depuis la partie de paroi de support (10, 310) augmente en s'approchant graduellement de la partie de table de support (11, 301), et une face d'extrémité ouverte (124, 314) qui est positionnée plus près de la partie de table de support (11, 301) que la surface inclinée (120, 312) et est dirigée vers la partie de table de support (11); et
une partie de butée (122) qui est prévue en une seule pièce avec le corps de la partie de paroi de support ou avec la partie de guidage (121) de manière à faire saillie dans une direction identique à la partie de guidage (121) par rapport à la partie de paroi de support (10, 310), et est pourvue d'une surface de butée (126) qui est inclinée à un endroit où la partie de butée (122) vient en butée sur l'objet (OB) de manière à réduire une largeur de saillie depuis la partie de paroi de support (10, 310) en s'approchant graduellement de la partie de table de support (11),
**caractérisé par le fait que** la surface de butée (126) de la partie de butée (122) est disposée plus près de la partie de table de support (11, 301) que la face d'extrémité ouverte (124, 314) de la partie de guidage (121), et des parties à cran d'encoche (66) venant en butée contre la surface de butée (126) sont formées dans un bord extérieur de la surface avant de l'objet (OB, 6).

2. Structure de fixation d'un objet selon la revendication 1, dans laquelle la largeur de saillie de la partie de butée (122) depuis la partie de paroi de support (10, 310) est inférieure à une largeur de saillie de la partie de guidage (121) depuis la partie de paroi de support (10, 310).

3. Structure de fixation d'un objet selon la revendication 1, dans laquelle
la partie de paroi de support (10, 310) est une partie de paroi périphérique d'un corps de boîtier (30) ayant une surface avant ouverte et un trou en forme de fente (300) est formé le long d'un bord d'ouverture sur la partie de paroi périphérique, le trou en forme de fente (300) étant espacé de la partie d'ouverture d'une distance prédéterminée,
la partie de table de support (11, 301) est prévue le long d'un bord arrière du trou en forme de fente (300), et
au moins un ensemble de parties de guidage et de butée est prévu sur une surface de paroi interne entre le trou en forme de fente de la partie de paroi périphérique et la partie d'ouverture.

4. Structure de fixation d'un objet selon la revendication 1, dans laquelle
les parties de paroi de support sont des corps de colonne ou des corps de paroi qui ont une surface de support d'une zone prédéterminée, et
des parties de table de support, de guidage, et de butée sont intégralement prévues sur la surface de support.

5. Dispositif optique comprenant la structure de fixation d'un objet selon l'une quelconque des revendications 1 à 4.
